# EUROPEAN PATENT SPECIFICATION

(11) **EP 2 112 843 B1**
(45) Date of publication and mention of the grant of the patent: **23.10.2013**
(21) Application number: 09158700.6
(22) Date of filing: 24.04.2009
(51) Int. Cl.: H04W 4/16

(54) **Call forwarding method and system for a roaming subscriber**
Verfahren und System für Rufweiterleitung für einen umherstreifenden Teilnehmer
Procédé et système de transfert d'appels pour un abonné itinerant

(30) Priority: 25.04.2008 CN 200810094003; 17.03.2009 WO PCT/CN2009/070843
(43) Date of publication of application: 28.10.2009
(73) Proprietor: Huawei Technologies Co., Ltd., Longgang District, Shenzhen Guangdong 518129 (CN)
(72) Inventor: Wu, Yong, 518129, Shenzhen Guangdong (CN); Liang, Jing, 518129, Shenzhen Guangdong (CN)
(74) Representative: Isarpatent

(56) References cited:
- EP-A- 1 531 647
- WO-A-98/26620
- WO-A-99/01004
- "Digital cellular telecommunications system (Phase 2+); Universal Mobile Telecommunications System (UMTS); Support of Optimal Routeing (SOR); Technical realization (3GPP TS 23.079 version 7.0.0 Release 7); ETSI TS 123 079" ETSI STANDARDS, LIS, SOPHIA ANTIPOLIS CEDEX, FRANCE, vol. 3-CN2;3-CN4, no. V7.0.0, 1 June 2007 (2007-06-01), XP014037715 ISSN: 0000-0001

## Description

### Field of the Invention

The present invention relates to a communication system and in particular to a call forwarding method, device and system.

### Background of the Invention

If a user intends to communicate with another user, he firstly registers in a Home Location Register for a network entry as well as relevant services, and when it is required to provide the user with a communication service, the user is served through a Mobile Switching Center (MSC)/HLR of the visited area of the user. When the user roams to another area, he needs to register subscriber information in a Visitor Location Register (VLR) of his roam area and is served by a Visited Mobile Switching Center (VMSC)/VLR of his roam area.

During a call, if a called user has subscribed to a relevant call forwarding service, then information related to the service will be recorded in the VLR of the visited area of the user. For example, when the called user is in a status of Busy, No Answer, Out of Service, etc., in which no connection can be established, forwarding of the call will take place, and if a call forwarded-to number set by the called user is a voice mailbox address, a video mailbox address or another available communication number, then the present call will be forwarded to the corresponding forwarded-to number. In the case that the forwarded-to number adopts a voice mailbox address or a video mailbox address, it is common that a mailbox server records voice or video for a calling user and then notifies the called user through a short message. Such call forwarding will be accomplished by the MSC/HLR of the visited area of the user if the user is in the area where he registers for a network entry or by the VMSC/VLR in the user's roam area if the user is in a roaming state.

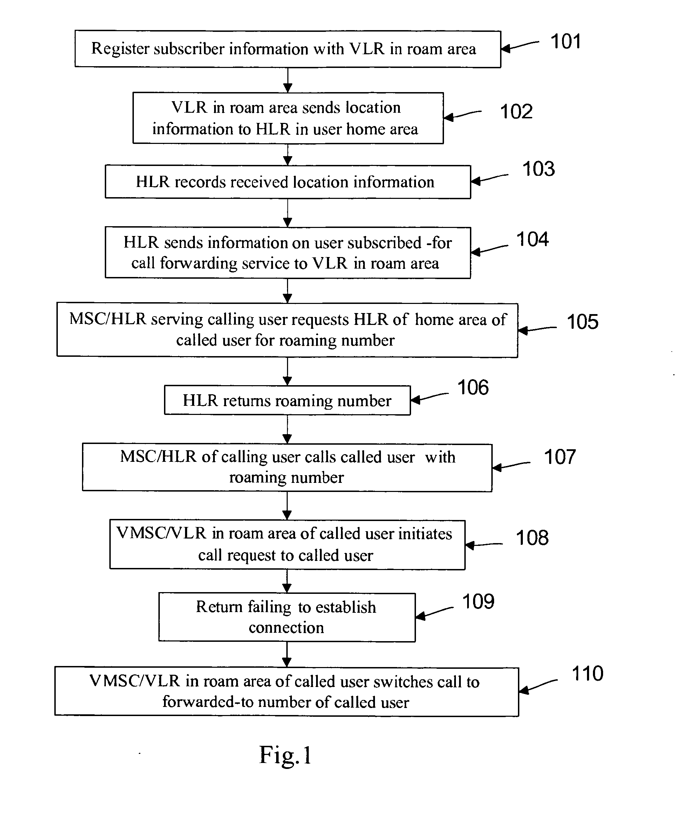

As illustrated in Fig.1, there is shown a flow chart of call forwarding after a mobile user roams and acts as a called user, and assuming that the mobile user sets a service for call forwarding to a voice mailbox, the flow is as follows:

101. The user arriving at a roam area registers subscriber information in the VLR of the roam area.

102. The VLR of the roam area sends a location update message to the HLR of the user home area upon receiving the registered subscriber information.

103. The HLR of the user home area records relevant information in the received location update message.

104. The HLR of the user home area sends to the VLR of the roam area the information on the service subscribed by the user, a piece of important information in the information is the call forwarding service subscribed by the user in the HLR of user home area and the information primarily includes a condition to trigger call forwarding and a call forwarded-to number.

105. The user acts as a called user to which a calling user initiates a call request, and the MSC/HLR (or the VMSC/VLR) serving the calling user requests a roaming number from the HLR of the home area of the called user.

106. Upon receiving the request for the roaming number from the MSC of the calling user, the HLR of the called user requests the roaming number from the VMSC/VLR of the roam area of the called user and returns the requested roaming number of the called user to the MSC/HLR (or the VMSC/VLR) of the calling user.

107. The MSC/HLR (or the VMSC/VLR) serving the calling user calls the called user according to the obtained roaming number, and at this time the call is switched to the VMSC/VLR of the roam area of the called user.

108. The VMSC/VLR of the roam area of the called user initiates the call request to the called user.

109. If the called user is busy, does not answer or is out of service, then a response containing information on failing to establish a connection with the called user who is busy, does not answer, or is out of service, etc., will be returned to the VMSC/VLR of the roam area of the called user.

110. The VMSC/VLR of the roam area of the called user switches the call request to the call forwarded-to number of the called user.

As can be seen from the above flow, current call forwarding is accomplished with the cooperation of the HLR of the home area of the called user and the VMSC/VLR of the currently visited area of the called user. When the user roams to the VMSC/VLR, the VLR knows from the HLR the subscription of the user for the service, and when the user acts as the called user as mentioned above, the VMSC forwards the call of the calling user to the forwarded-to number,

The inventors have identified during making the invention at least the following drawbacks in the current call forwarding function:

When the user roams abroad, forwarding through the VMSC/VLR of the roam area of the user will incur a higher long-distance fee. Furthermore, when ISDN User Part (ISUP) signaling goes through international gateway centers of a plurality of intermediate operators, the calling number and the original called number tend to be lost due to passage of a session through the international gateway centers. Consequently, the mail server to which the called user is homed can not be located in the network when the call is forwarded to the home nation.
EP 1531647 A2 discloses to a method for control of calls unanswered by a roaming user roaming on a roaming network, comprising monitoring outward bound calls to a roaming user, monitoring subsequent inward forwarding of those calls terminated without answering at said roaming users, and matching between the outward bound and inward forwarding.
WO 98/26620 A2 discloses a method for providing location-based call forwarding data to a mobile switching center serving a particular mobile station within a mobile telecommunications network. When a call enters the gateway mobile switching center (GMSC), the GMSC communicates with a home location register (HLR) associated with the mobile station to determine the MSC currently serving the mobile station. The HLR is periodically provided with a location update signal including data identifying the service area currently serving the mobile station. By analyzing the received data, the HLR is bale to determine the identity of the service area currently serving the mobile station.Summary of the Invention

Embodiments of the invention provide a call forwarding method, device and system to save part of a long-distance fee of call forwarding for a roaming called user.

To attain the above object, the embodiments of the invention adopt the following technical solutions.

A method of call forwarding for a roaming called user includes:
receiving, by an Origin Mobile Switching Center, OMSC, of a calling user, subscription information of a roaming called user from a Home Location Register, HLR, of the roaming called user, wherein the subscription information comprises the recorded Termination-CSI, T-CSI, of the roaming called user;
sending, by the OMSC, an Initial Detection Point, IDP, message to the Service Control Point, SCP, according to the recorded T-CSI of the roaming called user wherein the SCP provides the service in the intelligent network;
sending, by the SCP, a detection request to the OMSC to detect whether the OMSC receives an event of failing to establish a connection with the called user and a call continuation instruction to the OMSC according to the IDP message received from the OMSC;
obtaining, by the OMSC, the Mobile Station Roaming Number, MSRN, of the roaming called user from the HLR according to the call continuation instruction;
initiating, by the OMSC, a call request to the VMSCNLR with the MSRN of the roaming called user, and receiving an event of failing to establish a connection with the called user from the Visited Mobile Switching Center, VMSC, of the roaming called user;
receiving, by the SCP, an event of failing to establish a connection with a called user, which is reported from the OMSC, sending a forwarded-to number of the roaming called user which has been recorded in the SCP to the OMSC, and instructing the OMSC to switch a call to the forwarded-to number of the roaming called user.

A system of call forwarding for a called user includes:
an Origin Mobile Switching Center, OMSC, adapted to receive subscription information of a roaming called user from a Home Location Register, HLR, of the roaming called user, wherein the subscription information comprises the recorded Termination-CSI, T-CSI, of the roaming called user, and send an Initial Detection Point, IDP, message to the Service Control Point, SCP, according to the recorded T-CSI of the roaming called user wherein the SCP provides the service in the intelligent network, and obtain the Mobile Station Roaming Number, MSRN, of the roaming called user from the HLR according to a received call continuation instruction, and initiate an call request to the VMSCNLR with the MSRN of the roaming called user and receive an event of failing to establish a connection with the called user from the Visited Mobile Switching Center, VMSC, of the roaming called user; and
a Service Control Point, SCP, adapted to send a detection request to the OMSC to detect whether the OMSC receives an event of failing to establish a connection with the called user and a call continuation instruction to the OMSC according to the IDP message received from the OMSC, and receive the event of failing to establish a connection with a called user, which is reported from the OMSC, send a forwarded-to number of the roaming called user which has been recorded in the SCP to the OMSC, and instruct the OMSC to switch a call to the forwarded-to number of the roaming called user.

In the embodiments of the invention described in the above technical solutions, when the called user is in a status where no connection can be established, the monitor entity detects and then reports this status to the call forwarding control entity. The call forwarding control entity controls the call initiation entity to switch the call directly to the forwarded-to number of the called user. As can be seen that the embodiments of the invention avoid switching the call to the forwarded-to number of the called user through the visited mobile switching center of the visited area of the called user. If the embodiments of the invention are applied in call forwarding when the called user is in a roaming state, a long-distance fee of switching from the visited mobile switching center to the forwarded-to number of the called user can be saved, and a costly international long-distance fee can be saved particularly when the user roams abroad. Thus, the forwarding cost can be reduced with the solutions of the embodiments of the invention instead of call forwarding provided by the HLR in the prior art.

### Brief Description of the Drawings

Fig. 1 is a flow chart of a call forwarding method in the conventional art;

Fig.2 is a flow chart of a method of call forwarding for a called user in one embodiment of the invention;

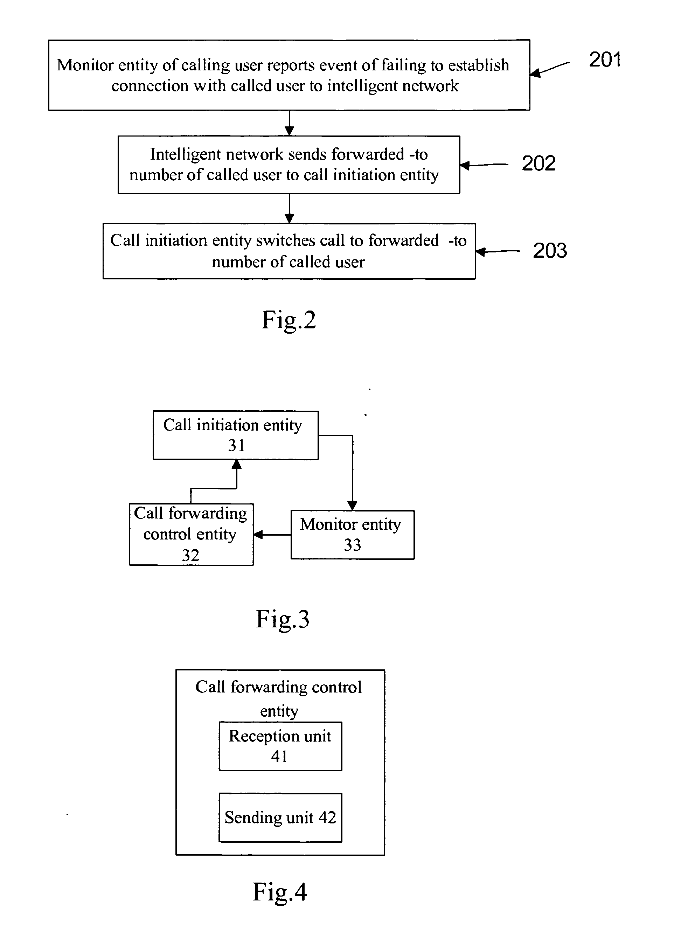

[0025] Fig.3 is a block diagram of a call forwarding system corresponding to Fig.2

Fig.4 is a block diagram of a call forwarding control entity in the embodiment of the invention;

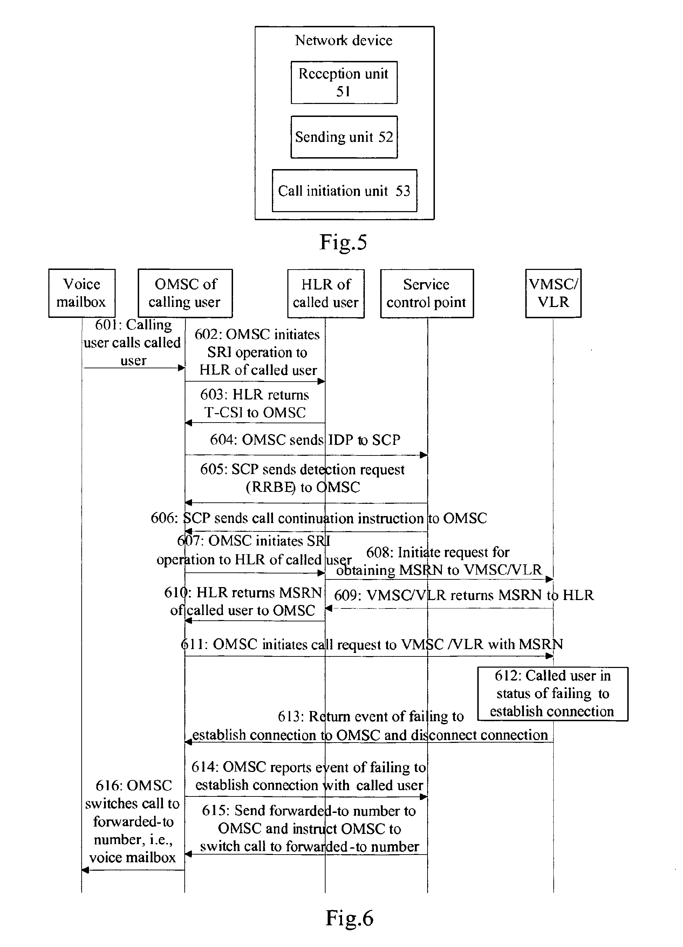

Fig.5 is a block diagram of a call initiation entity in the embodiment of the invention;

Fig.6 is a flow chart of a method of call forwarding for a called user in another embodiment of the invention;

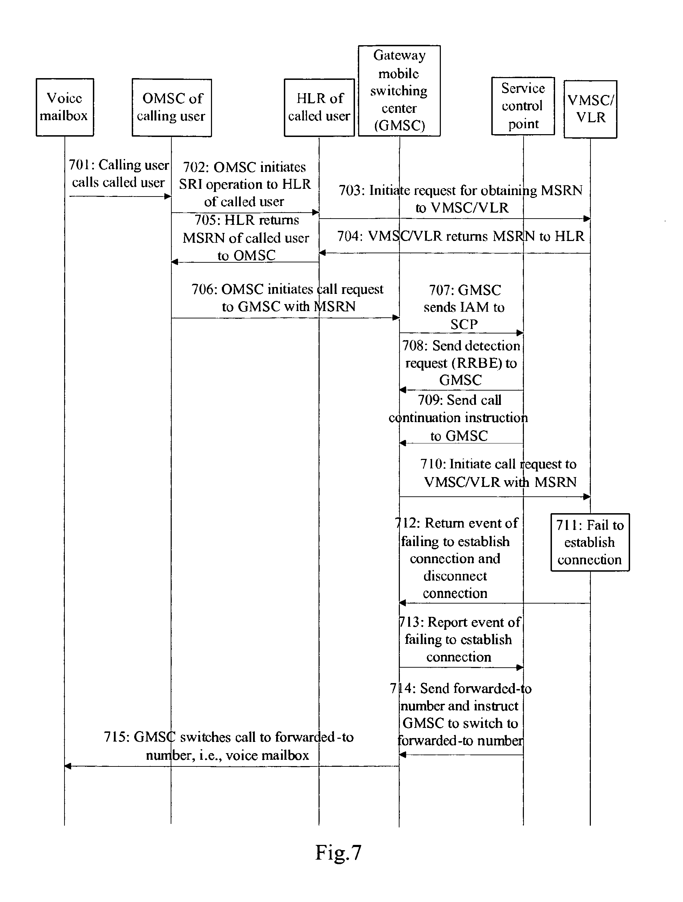

Fig.7 is a flow chart of a method of call forwarding for a called user in yet another embodiment of the invention; and

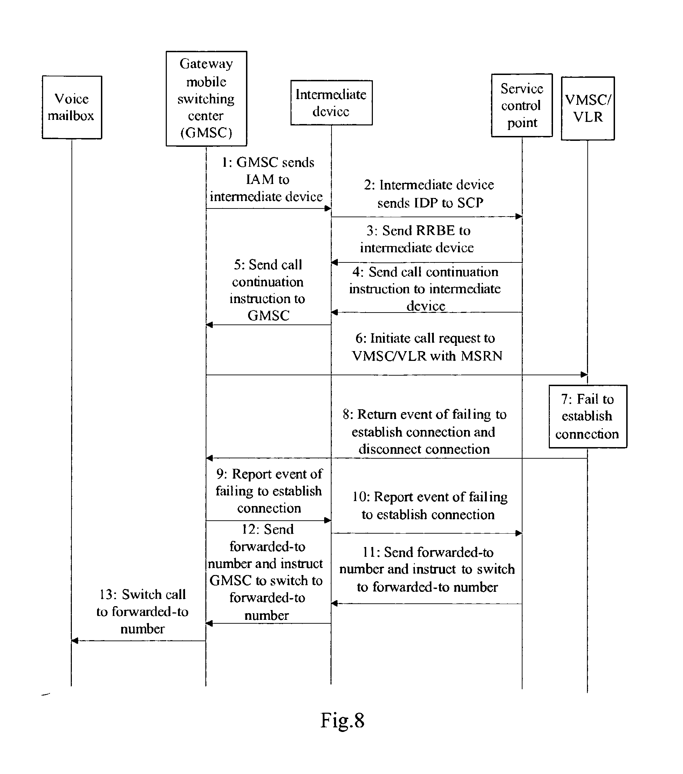

Fig.8 is a flow chart of another method of call forwarding for a called user in the embodiment illustrated in Fig.7 of the invention.

### Detailed Description of the Invention

In the embodiments of the invention, when a called user is in a status where no connection can be established, a call initiation entity of a calling user is controlled to switch a call to a forwarded-to number of the called user to thereby accomplish call forwarding, thus avoiding switching the call from a visited mobile switching center of the visited area of the called user to the forwarded-to number of the called user. If the called user is in a roaming state, then call forwarding from the calling side to the forwarded-to number is accomplished with the embodiments of the invention to save a long-distance fee of switching from the visited mobile switching center to the forwarded-to number of the called user.

The above control on the call initiation entity of the calling user can be accomplished with an Intelligent Network (IN), which is a service provision framework currently widely applied in Circuit Domain (CS) communication networks, and services are provided through the Intelligent Network in core communication networks of such as Public Switched Telephone Network (PSTN), Global System for Mobile communications (GSM), Wideband Code Division Multiple Access (WCDMA), Code Division Multiple Access (CDMA), etc. A service Switching Point (SSP) is introduced in the core communication network to connect the core communication network and an upper-layer intelligent network service device. The intelligent network acting as an upper-layer service network of the communication network can generate and implement various new services for the communication network.

If a user B subscribes to a called user IN service, then Camel Subscription Information (CSI) of the intelligent service is registered in advance in the HLR of the user B, and a specific process of providing the service through the IN is as follows: when a calling user initiates a call to the user B, the MSC of the calling user (or called party's home network, in the scenario of internetworking call) obtains CSI data from the HLR of the user B and knows that the user B has subscribed for the intelligent network service; then the MSC of the calling user follows an IN call processing flow, that is, an Initial Detection Point (IDP) message is sent to a Service Control Point (SCP) to which the user B is homed, so as to trigger the call flow to the intelligent network, thereby establishing a control relationship between the MSC of the calling user and the IN.

In the case that no connection can be established for the called user who is busy, does not answer, is out of service, etc., the MSC of the visited area of the called user can pass the information on failing to establish a connection with the called user to the MSC of the calling user, and the MSC of the calling user reports the information to the IN, and the subsequent call can be processed under the control of the IN.

A method of triggering the IN service in a practical application will not be limited to the above CSI trigger way but can also be another trigger way, for example, a trigger way through a Gateway Mobile Switching Center (GMSC). Reference can be made to the embodiments for details of a specific trigger application. The embodiments of a call forwarding method and device according to the invention will be detailed below in connection with the drawings.

One embodiment discloses a method of call forwarding for a called user, and as illustrated in Fig.2, the method includes the following steps.

201. After a call initiation entity of a calling user (or called party's home network, in the scenario of internetworking call) receives an event of failing to establish a connection with a called user, which is returned from a visited mobile switching center of the called user, a monitor entity detects the event of failing to establish a connection with the called user and reports the event of failing to establish a connection with the called user to an intelligent network.

202. The intelligent network sends a forwarded-to number of the called user to the call initiation entity in response to the received event of failing to establish a connection with the called user; and

203. The intelligent network instructs the call initiation entity to switch a call to the forwarded-to number of the called user.

Corresponding to the above method of call forwarding for a called user, the present embodiment further provides a system of call forwarding for a called user, and as illustrated in Fig.3, the system includes a call initiation entity 31 of the visited area of a calling user, a monitor entity 33 adapted for detection and a call forwarding control entity 32 adapted to control call forwarding.

After the call initiation entity 31 receives an event of failing to establish a connection with the called user (e.g., the called user is busy, does not answer, is out of service, etc.), the monitor entity 33 can detect the event of failing to establish a connection with the called user and then report the event of failing to establish a connection with the called user to the call forwarding control entity 32. Upon receiving the event of failing to establish a connection with the called user, the call forwarding control entity 32 sends a forwarded-to number of the called user to the call initiation entity 31 and instructs the call initiation entity 31 to switch a call to the forwarded-to number of the called user.

As illustrated in Fig.4, the above call forwarding control entity includes a reception unit 41 and a sending unit 42.

Particularly, upon receiving the event of failing to establish a connection with the called user, which is returned from a visited mobile switching center of the called user, the call initiation entity of the calling user report the event of failing to establish a connection with the called user to the control entity, and after the reception unit 41 in the control entity receives the event of failing to establish a connection with the called user, the sending unit 42 sends the forwarded-to number of the called user to the call initiation entity and instructs the call initiation entity to switch the call to the forwarded-to number of the called user.

As illustrated in Fig.5, the present embodiment of the invention further provides a network device including a reception unit 51, a sending unit 52 and a call initiation unit 53.

Particularly, the reception unit 51 is adapted to receive from a visited mobile switching center of a called user an event of failing to establish a connection with the called user and the sending unit 52 sends the event of failing to establish a connection with the called user to a call forwarding control entity. The call forwarding control entity sends a forwarded-to number of the called user to a call initiation entity upon receiving the event of failing to establish a connection with the called user; and the call initiation entity requests a call connection through the call initiation unit 53 to the forwarded-to number of the called user upon receiving the forwarded-to number of the called user through the reception unit 51. The network device illustrated in Fig.5 can be a mobile switching center or a gateway mobile switching center.

The present embodiment further provides a monitor entity including a reception unit and a sending unit, where the reception unit receives from a call initiation entity an event of failing to establish a connection with a called user, and then the sending unit sends the event of failing to establish a connection with the called user to a call forwarding control entity. Also the reception unit in the present embodiment further receives a forwarded-to number of the called user sent from the call forwarding control entity, and the sending unit sends the forwarded-to number of the called user to the call initiation entity, so that the call initiation entity switches a call to the forwarded-to number of the called user. In the embodiment of the invention described in the above solution, after receiving the event of failing to establish a connection with the called user, the call forwarding control entity sends the forwarded-to number of the called user to the call initiation entity and controls to switch the present call to the forwarded-to number of the called user. Switching of the call to the forwarded-to number of the called user is accomplished directly from the call initiation entity of the calling user to the forwarded-to number of the called user instead of directly through the visited mobile switching center of the called user, thereby a long-distance fee between the visited mobile switching center and the forwarded-to number of the called user is saved. Thus, the forwarding cost can be reduced with the solutions of the embodiments of the invention instead of call forwarding provided by the HLR in the prior art.

Another embodiment is directed towards a specific implementation of the method of call forwarding for a called user when a call initiation entity and a monitor entity of a calling user is a mobile switching center, and in this present embodiment, call forwarding is controlled through a Service Control Point (SCP) in an intelligent network.

For the implementation of the present embodiment, the called user firstly needs to subscribe for a relevant call forwarding service in the intelligent network, and thus the SCP will provide the called user with the call forwarding service. Particularly, a set forwarded-to number is recorded in the SCP, and Termination-CSI (T-CSI) related to the subscription of the user for the call forwarding service in the intelligent network is recorded in a home location register of the called user. As illustrated in Fig.6, the method of call forwarding for a called user includes the following steps:

601. A calling user initiates a call to a called user, and at this time the calling user may be either in a roaming state or located in a home area of the calling user, so that the calling user may initiate the call to the called user through either the Origin Mobile Switching Center (OMSC) or another network (e.g., a visited mobile switching center in his roam area). In this embodiment, the calling user is located in the home area and initiates the call to the called user through the OMSC.

602. The OMSC of the calling user initiates a Send Routing Information (SRI) operation to the HLR of the called user to request the initiation of the call to the called user or to obtain a corresponding roaming number (MSRN) of the called user to initiate the call to the called user with the MSRN.

603. Because the called user is in a roaming state and the T-CSI of the subscription of the user for the call forwarding service in the intelligent network is recorded in the HLR, the HLR of the called user returns the recorded T-CSI to the OMSC of the calling user.

604. The OMSC of the calling user knows the subscription of the called user for the intelligent network service upon receiving the above T-CSI, and therefore triggers the intelligent network to process the present call according to the T-CSI by sending an Initial Detection Point (IDP) message to the SCP providing the service in the intelligent network.

605. The SCP commences processing the present call upon receiving the IDP message by sending to the OMSC a detection request to detect whether the OMSC receives an event of failing to establish a connection with the called user. Generally the OMSC will receive the event of failing to establish a connection with the called user when the called user is busy, does not answer or is out of service. The detection request in the present embodiment is implemented as a Request Report BCSM Event (RRBE) message.

606. The SCP sends a call continuation instruction to the OMSC, so that the OMSC continues with the following call flow.

607. The OMSC of the calling user initiates again a Send Routing Information (SRI) operation to the HLR of the called user to obtain the corresponding roaming number (MSRN) of the called user to thereby initiate the call to the called user with the MSRN.

608. The HLR of the called user initiates a request for obtaining the MSRN to the VMSC/VLR of the roam area of the called user upon receiving the present SRI.

609. The VMSC/VLR returns to the HLR of the called user a response carrying the MSRN of the called user.

610. Because the T-CSI has been returned in the previous SRI operation, the HLR of the called user returns the MSRN of the called user to the OMSC of the calling user in this step.

611. The OMSC of the calling user initiates a call request to the VMSC/VLR with the MSRN of the called user.

612. The VMSC/VLR initiates the call request to the called user upon receiving the call request, and typically establishes a relevant connection and processes with an existing call flow when the called user answers, or processes as in the method of the present embodiment when the called user is in a status of failing to establish a connection with the called user who is busy or out of service, does not answer, etc.

613. Because no connection can be established with the called user, the VMSC/VLR returns to the OMSC of the calling user an event of failing to establish a connection with the called user and disconnects the connection with the OMSC of the calling user.

614. Because the SCP sends the detection request to the OMSC of the calling user to detect the event of failing to establish a connection with the called user, the OMSC of the calling user reports the event of failing to establish a connection with the called user through Event Report BSCM (ERB), hangs up the call and waits for an instruction of the SCP.

615. The SCP determines according to the IDP information that the called user has roamed, that no connection can be established with the called user and that the present call shall be switched to a forwarded-to number of the called user which has been recorded in the SCP, then the SCP sends the forwarded-to number of the called user to the OMSC of the calling user and instructs the OMSC of the calling user to switch the call to the forwarded-to number of the called user. The forwarded-to number may be a voice mailbox, video mailbox or another available number, and in the present embodiment the user sets a Voice Mailbox (VM).

616. The OMSC of the calling user switches the present call to the forwarded-to number which is set by the called user, i.e., the voice mailbox, and the OMSC and the voice mailbox cooperates to accomplish a subsequent voice recording flow.

The present embodiment controls call forwarding for the called user through the SCP in the intelligent network, so that the present call is switched to the forwarded-to number of the called user, e.g., the voice mailbox, directly through the OMSC of the calling user, when no connection can be established with the called user. Thus, a long-distance fee incurred due to the switching from the roam VMSC of the called user to the forwarded-to number can be saved. Furthermore, the present embodiment performs call forwarding through the OMSC of the calling user, and this can reduce a devious path during the present call is routed and also reduce a processing workload for devious path in the communication network.

In the present embodiment, the OMSC of the calling user performs switching to the forwarded-to number, and because the forwarded-to number is recorded in the SCP and the OMSC can obtain the forwarded-to number from the SCP, the present call can be switched to the forwarded-to number in the case of service triggering with ISUP signaling.

The user is required in the present embodiment to subscribe for the call forwarding service controlled by the intelligent network, which can be applicable to call forwarding when the called user is in a roaming state including domestic roaming and abroad roaming. This way of using the T-CSI of the called user to trigger the control by the intelligent network is effective for the called user which subscribes for such a service to thereby save a processing workload at the server end.

Another embodiment is directed toward a specific implementation of the method of call forwarding for the called user when the call initiation entity and the monitor entity of the calling user is a gateway mobile switching center, and in the present embodiment the call forwarding control entity is implemented by a Service Control Point (SCP) in an intelligent network. Because a call request received by the gateway mobile switching center is initiated according to the MSRN of the called user, the gateway mobile switching center can determine that the present call is a roam call and can render the present call to be controlled by the SCP, thereby a long-distance fee during call forwarding when no connection can be established with the called user is saved. As illustrated in Fig.7, the method of call forwarding for a called user includes the following steps.

701. A calling user initiates a call to a called user, and at this time the calling user may be either in a roaming state or located in a home area of the calling user, so that the calling user may initiate the call to the called user through either Origin Mobile Switching Center (OMSC) of the calling user or another network (e.g., a visited mobile switching center in the calling user's roam area). In this embodiment, the calling user is located in the origin and initiates the call to the called user through the OMSC.

702. The OMSC of the calling user initiates a Send Routing Information (SRI) operation to the HLR of the called user to request the initiation of the call to the called user or to obtain a corresponding roaming number (MSRN) of the called user to initiate the call to the called user with the MSRN.

703. The HLR of the called user initiates a request for obtaining the MSRN to the VMSC/HLR of the roam area of the called user upon receiving SRI.

704. The VMSC/VLR returns to the HLR of the called user a response carrying the MSRN of the called user.

705. The HLR of the called user returns the MSRN of the called user to the OMSC of the calling user.

706. The OMSC of the calling user initiates a call request to a Gateway Mobile Switching Center (GMSC) with the MSRN.

707. Because a call for which a connection is established through the GMSC is required to be controlled in the intelligent network because the called user is in a roaming state, the GMSC sends an Initial Detection Point (IDP) message to the SCP of intelligent network to trigger the SCP to monitor the present call.

708. The SCP commences processing the present call upon receiving IDP by sending to the GMSC a detection request to detect whether the GMSC receives an event of failing to establish a connection with the called user. Generally the GMSC will receive the event of failing to establish a connection with the called user when the called user is busy, does not answer or is out of service, and the detection request in the present embodiment is implemented as a Request Report BCSM Event (RRBE) message.

709. The SCP sends a call continuation instruction to the GMSC, so that the GMSC continues with the following call flow.

710. The GMSC initiates a call request to the VMSC/VLR with the MSRN of the called user.

711. The VMSCNLR initiates the call request to the called user upon receiving the call request, and typically establishes a relevant connection and processes with an existing call flow when the called user answers, or processes as in the method of the present embodiment when the called user is in a status of failing to establish a connection with the called user who is busy or out of service, does not answer, etc.

712. Because no connection can be established with the called user, the VMSC/VLR returns to the GMSC of the calling user an event of failing to establish a connection with the called user and disconnects the connection with the GMSC of the calling user.

713. Because the SCP sends the detection request to the GMSC to detect the event of failing to establish a connection with the called user, the GMSC reports the event of failure to establish a connection with the called user through Event Report BCSM (ERB), hangs up the call and waits for an instruction of the SCP.

714. The SCP sends a forwarded-to number of the called user directly to the GMSC and instructs the GMSC of the calling user to switch the present call to the forwarded-to number of the called user. The forwarded-to number may be a voice mailbox, video mailbox or another available number, and in the present embodiment the user sets a Voice Mailbox (VM).

715. The GMSC switches the present call to the forwarded-to number which is set by the called user, i.e., the voice mailbox, and the GMSC and the voice mailbox cooperates to accomplish a subsequent voice recording flow.

Alternatively, when the call initiation entity is a gateway mobile switching center and the monitor entity is an intermediate device, an embodiment of the invention can be implemented as follows: The GMSC communicates with the SCP through the intermediate device, a specific communication flow is consistent with the steps 701 to 706, and the subsequent processing flow steps 707 to 714 can be replaced with the flow illustrated in Fig.8, which will be detailed as follows.

1. The GMSC firstly sends an Initial Address Message (IAM) of intelligent network signaling to the intermediate device upon receiving the call request.

2. The intermediate device sends an IDP message to the SCP in response to the IAM message upon receiving the IAM message.

3. The SCP sends a detection request to the intermediate device, so that the intermediate device detects whether the GMSC receives an event of failing to establish a connection with the called user. The detection request in the present embodiment is implemented as a Request Report BCSM Event (RRBE) message.

4. The SCP sends a call continuation instruction to the intermediate device.

5. The intermediate device forwards the call continuation instruction to the GMSC, so that the GMSC continues with the following call flow.

6. The GMSC initiates a call request to the VMSC/VLR according to the MSRN of the called user.

7. The VMSC/VLR initiates the call request to the called user upon receiving the call request, and typically establishes a relevant connection and processes with an existing call flow when the called user answers, or processes as in the method of the present embodiment when the called user is in a status of failing to establish a connection with the called user who is busy or out of service, does not answer, etc.

8. Because no connection can be established with the called user, the VMSC/VLR returns to the GMSC of the calling user an event of failing to establish a connection with the called user and disconnects the connection with the GMSC of the calling user.

9. Because the SCP sends the detection request to the intermediate device to detect the event of failing to establish a connection with the called user, the GMSC reports to the intermediate device the event of failing to establish a connection with the called user through ERB and hangs up the call.

10. The intermediate device reports to the SCP the event of failing to establish a connection with the called user through ERB.

11. The SCP sends a forwarded-to number of the called user to the intermediate device and sends to the intermediate device an instruction to instruct the GMSC of the calling user to switch the call to the forwarded-to number of the called user.

12. The intermediate device forwards the forwarded-to number of the called user and the instruction to the GMSC.

13. The GMSC switches the present call to the forwarded-to number which is set by the called user, i.e., a voice mailbox, and the GMSC and the voice mailbox cooperates to accomplish a subsequent voice recording flow.

The present embodiment controls call forwarding for the called user through the SCP in the intelligent network, so that the present call is switched to the forwarded-to number of the called user, e.g., the voice mailbox, directly through the GMSC of the calling user, when no connection can be established with the called user. Thus, a long-distance fee incurred due to the switching from the roam VMSC of the called user to the forwarded-to number can be saved.

In the present embodiment, the GMSC of the calling user performs switching to the forwarded-to number, and because the forwarded-to number is recorded in the SCP and the GMSC can obtain the forwarded-to number from the SCP, the present call can be switched to the forwarded-to number in the case of service triggering with ISUP signaling or intelligent network signaling.

The present embodiment can perform call forwarding when the called user is in a roaming state including domestic roaming and abroad roaming. In the present embodiment, no T-CSI is adopted to trigger the control by the intelligent network, but each call through the GMSC is controlled by the SCP, so that it is unnecessary for the user to subscribe for such call forwarding service, thus bringing much convenience to the user.

Another embodiment provides a system of call forwarding for a called user, which includes a monitor entity and a call forwarding control entity, where the monitor entity reports to the call forwarding control entity an event of failing to establish a connection with a called user; and upon receiving the event of failing to establish a connection with the called user, the call forwarding control entity sends a forwarded-to number of the called user to a call initiation entity and instructs the call initiation entity to switch the call to the forwarded-to number of the called user. The above monitor entity is enabled to report to the call forwarding control entity the event of failing to establish a connection with the called user by setting the monitor entity in a specific way that the call forwarding control entity sends a detection request to the monitor entity to request the monitor entity to detect the event of failing to establish a connection with the called user.

Corresponding to the above embodiment illustrated in Fig.6, the monitor entity and the call initiation entity of the calling user in the present embodiment can be implemented by the OMSC of the calling user. The OMSC receives the subscription information of the called user from the home location register of the called user and triggers in response to the subscription information of the called user the call forwarding control entity to send the detection request to the monitor entity (i.e., the mobile switching center of the calling user). Particularly, the OMSC acting as the call initiation entity and the monitor entity of the calling user primarily includes the reception unit 51, the sending unit 52 and the call initiation unit 53 illustrated in Fig.5. Reference can be made to the descriptions of Fig.5 for details of the respective unit, and repeated descriptions thereof will be omitted here.

Corresponding to the embodiment illustrated in Fig.7, the monitor entity and the call initiation entity of the calling user in the present embodiment can be implemented by the GMSC of the calling user. The GMSC receives the roaming number of the called user from the mobile switching center of the calling user and triggers the call forwarding control entity to send the detection request to the monitor entity (i.e., the GMSC).

Particularly, the GMSC acting as the call initiation entity and the monitor entity of the calling user primarily includes the reception unit 51, the sending unit 52 and the call initiation unit 53 illustrated in Fig.5. Reference can be made to the descriptions of Fig.5 for details of the respective unit, and repeated descriptions thereof will be omitted here.

The system of call forwarding for a called user in the present embodiment can alternatively be constructed as follows: the call initiation entity is implemented by the GMSC of the calling user, and the monitor entity is implemented by an intermediate device. The GMSC is connected to the call forwarding control entity through the intermediate device and triggers through the intermediate device the call forwarding control entity to send the detection request to the intermediate device.

The call needs to be controlled by the SCP in both of the embodiment illustrated in Fig.6 and the embodiment illustrated in Fig.7, and as illustrated in Fig.4, the SCP acting as a call forwarding control entity particularly includes a reception unit 41 and a sending unit 42.

In a specific implementation, the sending unit 42 firstly sends in advance a detection request to the call initiation entity of the calling user to request to detect that the call initiation entity of the calling user receives an event of failing to establish a connection with the called user.

Thus, the call initiation entity of the calling user reports automatically to the control entity the event of failing to establish a connection with the called user upon receiving the event of failing to establish a connection with the called user, which is returned from the visited mobile switching center of the called user; and after the reception unit 41 in the control entity receives the event of failing to establish a connection with the called user, the sending unit 42 sends a forwarded-to number of the called user to the call initiation entity and controls the call initiation entity to switch a call to the forwarded-to number of the called user.

Instead of being implemented by the SCP, the call forwarding control entity in the present embodiment can be implemented otherwise, e.g., by a separate device provided with the corresponding functions of the SCP.

From the above descriptions of the embodiments, those skilled in the art can appreciate that the invention can be implemented with software and a necessary general hardware platform or with hardware, but the former is a preferred embodiment in many cases. Based upon such understanding, the technical solutions of the invention or a part thereof contributive to the prior art can essentially be embodied in the form of a software product which is stored in a readable storage medium, e.g., a floppy disk, a hard disk, an optical disk, etc., of a computer, and which includes several instructions to make a device (e.g., a server, a network device, etc.) to implement the methods according to the respective embodiments of the invention.

The foregoing descriptions are merely the illustrative embodiments of the invention, but the scope of the invention will not be limited thereto, and any variations or substitutions that can readily occur to those skilled in the art in light of the disclosure of the invention shall be encompassed within the scope of the invention as defined in the appended claims.

## Claims

1. A method of call forwarding for a roaming called user, comprising:
receiving (603), by an Origin Mobile Switching Center, OMSC, of a calling user, subscription information of the roaming called user from a Home Location Register, HLR, of the roaming called user, wherein the subscription information comprises the recorded Termination-CSI, T-CSI, of the roaming called user;
sending (604), by the OMSC, an Initial Detection Point, IDP, message to the Service Control Point, SCP, according to the recorded T-CSI of the roaming called user wherein the SCP provides the service in an intelligent network;
sending (605), by the SCP, a detection request to the OMSC to detect whether the OMSC receives an event of failing to establish a connection with the called user and a call continuation instruction to the OMSC according to the IDP message received from the OMSC;
obtaining (610), by the OMSC, the Mobile Station Roaming Number, MSRN, of the roaming called user from the HLR according to the call continuation instruction;
initiating (611), by the OMSC, a call request to the VMSCNLR with the MSRN of the roaming called user, and receiving an event of failing to establish a connection with the called user from the Visited Mobile Switching Center, VMSC, of the roaming called user;
receiving (614), by the SCP, an event of failing to establish a connection with a called user, which is reported from the OMSC, sending (615), by the SCP, a forwarded-to number of the roaming called user which has been recorded in the SCP to the OMSC, and instructing (616), by the SCP, the OMSC to switch a call to the forwarded-to number of the roaming called user.

2. A system of call forwarding for a roaming called user, comprising:
an Origin Mobile Switching Center, OMSC, adapted to receive subscription information of the roaming called user from a Home Location Register, HLR, of the roaming called user, wherein the subscription information comprises the recorded Termination-CSI, T-CSI, of the roaming called user, and send an Initial Detection Point, IDP, message to the Service Control Point, SCP, according to the recorded T-CSI of the roaming called user wherein the SCP provides the service in an intelligent network, and obtain the Mobile Station Roaming Number, MSRN, of the roaming called user from the HLR according to a received call continuation instruction, and initiate an call request to the VMSC/VLR with the MSRN of the roaming called user and receive an event of failing to establish a connection with the called user from the Visited Mobile Switching Center, VMSC, of the roaming called user; and
a Service Control Point, SCP, adapted to send a detection request to the OMSC to detect whether the OMSC receives an event of failing to establish a connection with the called user and a call continuation instruction to the OMSC according to the IDP message received from the OMSC, and receive the event of failing to establish a connection with a called user, which is reported from the OMSC, send a forwarded-to number of the roaming called user which has been recorded in the SCP to the OMSC, and instruct the OMSC to switch a call to the forwarded-to number of the roaming called user.

## Patentansprüche

1. Verfahren zur Anrufweiterleitung für einen roamenden angerufenen Benutzer, mit den folgenden Schritten:
eine Ursprungs-Mobilvermittlungsstelle OMSC eines anrufenden Benutzers empfängt (603), Subskriptionsinformationen des roamenden angerufenen Benutzers von einem Heimatregister HLR des roamenden angerufenen Benutzers, wobei die Subskriptionsinformationen die aufgezeichneten "Termination-CSI" T-CSI des roamenden angerufenen Benutzers umfassen;
die OMSC sendet (604) eine "Initial Detection Point-" bzw. IDP-Nachricht zu dem "Service Control Point" SCP gemäß den aufgezeichneten T-CSI des roamenden angerufenen Benutzers, wobei der SCP den Dienst in einem intelligenten Netz bereitstellt;
der SCP sendet (605) eine Detektionsanforderung zu der OMSC, um zu detektieren, ob die OMSC ein Ereignis des Nichtherstellenkönnens einer Verbindung mit dem angerufenen Benutzer empfängt, und eine Anruffortsetzungsanweisung zu der OMSC gemäß der von der OMSC empfangenen IDP-Nachricht;
die OMSC erhält (610) die "Mobile Station Roaming Number" MSRN des roamenden angerufenen Benutzers von dem HLR gemäß der Anruffortsetzungsanweisung;
die OMSC leitet eine Anrufanforderung an VMSC/VLR mit der MSRN des roamenden angerufenen Benutzers ein (611) und empfängt ein Ereignis des Nichtherstellenkönnens einer Verbindung mit dem angerufenen Benutzer von der besuchten Mobilvermittlungsstelle VMSC des roamenden angerufenen Benutzers;
der SCP empfängt (614) ein Ereignis des Nichtherstellenkönnens einer Verbindung mit einem angerufenen Benutzer, das von der OMSC gemeldet wird, der SCP sendet (615) eine Weiterleitungszielnummer des roamenden angerufenen Benutzers, die in dem SCP aufgezeichnet wurde, zu der OMSC und der SCP weist die OMSC an (616), einen Anruf auf die Weiterleitungszielnummer des roamenden angerufenen Benutzers zu legen.

2. System zur Anrufweiterleitung für einen roamenden angerufenen Benutzer, umfassend:
eine Ursprungs-Mobilvermittlungsstelle OMSC, ausgelegt zum Empfangen von Subskriptionsinformationen des roamenden angerufenen Benutzers von einem Heimatregister HLR des roamenden angerufenen Benutzers, wobei die Subskriptionsinformationen die aufgezeichneten "Termination-CSI" T-CSI des roamenden angerufenen Benutzers umfassen, und Senden einer "Initial Detection Point-" bzw. IDP-Nachricht zu dem "Service Control Point" SCP gemäß den aufgezeichneten T-CSI des roamenden angerufenen Benutzers, wobei der SCP den Dienst in einem intelligenten Netz bereitstellt, und Erhalten der "Mobile Station Roaming Number" MSRN des roamenden angerufenen Benutzers von dem HLR gemäß einer empfangenen Anruffortsetzungsanweisung und Einleiten einer Anrufanforderung an VMSC/VLR mit der MSRN des roamenden angerufenen Benutzers und Empfangen eines Ereignises des Nichtherstellenkönnens einer Verbindung mit dem angerufenen Benutzer von der besuchten Mobilvermittlungsstelle VMSC des roamenden angerufenen Benutzers, und
einen "Serivce Control Point" SCP, ausgelegt zum Senden einer Detektionsanforderung zu der OMSC, um zu detektieren, ob die OMSC ein Ereignis des Nichtherstellenkönnens einer Verbindung mit dem angerufenen Benutzer empfängt, und einer Anruffortsetzungsanweisung zu der OMSC gemäß der von der OMSC empfangenen IDP-Nachricht und Empfangen des Ereignisses des Nichtherstellenkönnens einer Verbindung mit einem angerufenen Benutzer, das von der OMSC gemeldet wird, Senden einer Weiterleitungszielnummer des roamenden angerufenen Benutzers, die in dem SCP aufgezeichnet wurde, zu der OMSC und Anweisen der OMSC, einen Anruf auf die Weiterleitungszielnummer des roamenden angerufenen Benutzers zu legen.

## Revendications

1. Procédé de renvoi d'appel pour un utilisateur appelé itinérant, comprenant :
la réception (603), par un Centre de Commutation de Services Mobiles d'Origine, OMSC, d'un utilisateur appelant, d'informations d'abonnement de l'utilisateur appelé itinérant depuis un Enregistreur de Position de Rattachement, HLR, de l'utilisateur appelé itinérant, les informations d'abonnement comprenant le CSI de Terminaison, T-CSI, enregistré de l'utilisateur appelé itinérant ;
l'envoi (604), par l'OMSC, d'un message de Point de Détection Initial, IDP, au Point de Commande de Service, SCP, en fonction du T-CSI enregistré de l'utilisateur appelé itinérant, le SCP fournissant le service dans un réseau intelligent ;
l'envoi (605), par le SCP, d'une requête de détection à l'OMSC pour détecter que l'OMSC reçoit ou non un événement de défaillance d'établissement de connexion avec l'utilisateur appelé et d'une instruction de continuation d'appel à l'OMSC en fonction du message IDP reçu depuis l'OMSC ;
l'obtention (610), par l'OMSC, du Numéro Itinérant de Station Mobile, MSRN, de l'utilisateur appelé itinérant depuis le HLR en fonction de l'instruction de continuation d'appel ;
le lancement (611), par l'OMSC, d'une requête d'appel auprès du VMSC/VLR avec le MSRN de l'utilisateur appelé itinérant, et la réception d'un événement de défaillance d'établissement de connexion avec l'utilisateur appelé depuis le Centre de Commutation de Services Mobiles Visité, VMSC, de l'utilisateur appelé itinérant ;
la réception (614), par le SCP, d'un événement de défaillance d'établissement de connexion avec un utilisateur appelé, lequel est signalé par l'OMSC, l'envoi (615), par le SCP, d'un numéro de renvoi de l'utilisateur appelé itinérant qui a été enregistré dans le SCP vers l'OMSC, et l'instruction (616), par le SCP, à l'OMSC de commuter un appel sur le numéro de renvoi de l'utilisateur appelé itinérant.

2. Système de renvoi d'appel pour un utilisateur appelé itinérant, comprenant :
un Centre de Commutation de Services Mobiles d'Origine, OMSC, adapté pour recevoir des informations d'abonnement de l'utilisateur appelé itinérant depuis un Enregistreur de Position de Rattachement, HLR, de l'utilisateur appelé itinérant, les informations d'abonnement comprenant le CSI de Terminaison, T-CSI, enregistré de l'utilisateur appelé itinérant, et envoyer un message de Point de Détection Initial, IDP, au Point de Commande de Service, SCP, en fonction du T-CSI enregistré de l'utilisateur appelé itinérant, le SCP fournissant le service dans un réseau intelligent, et obtenir le Numéro Itinérant de Station Mobile, MSRN, de l'utilisateur appelé itinérant depuis le HLR en fonction d'une instruction de continuation d'appel reçue et lancer une requête d'appel auprès du VMSC/VLR avec le MSRN de l'utilisateur appelé itinérant et recevoir un événement de défaillance d'établissement de connexion avec l'utilisateur appelé depuis le Centre de Commutation de Services Mobiles Visité, VMSC, de l'utilisateur appelé itinérant ; et
un Point de Commande de Service, SCP, adapté pour envoyer une requête de détection à l'OMSC pour détecter que l'OMSC reçoit ou non un événement de défaillance d'établissement de connexion avec l'utilisateur appelé et une instruction de continuation d'appel à l'OMSC en fonction du message IDP reçu depuis l'OMSC, et recevoir l'événement de défaillance d'établissement de connexion avec un utilisateur appelé, lequel est signalé par l'OMSC, envoyer un numéro de renvoi de l'utilisateur appelé itinérant qui a été enregistré dans le SCP vers l'OMSC, et instruire l'OMSC de commuter un appel sur le numéro de renvoi de l'utilisateur appelé itinérant.
